(19) Europäisches Patentamt
European Patent Office
Office européen des brevets

(11) **EP 1 702 937 A1**

(12) **EUROPEAN PATENT APPLICATION**
published in accordance with Art. 158(3) EPC


(43) Date of publication:
**20.09.2006 Bulletin 2006/38**

(21) Application number: **05703335.9**

(22) Date of filing: **06.01.2005**

(51) Int Cl.:
***C08G 18/16** (2006.01)* ***C08G 18/42** (2006.01)*
***C08G 69/44** (2006.01)* *C08G 18/16 (2006.01)*
*C08G 101/00 (2006.01)*

(86) International application number:
**PCT/JP2005/000067**

(87) International publication number:
**WO 2005/066235 (21.07.2005 Gazette 2005/29)**

(84) Designated Contracting States:
**AT BE BG CH CY CZ DE DK EE ES FI FR GB GR HU IE IS IT LI LT LU MC NL PL PT RO SE SI SK TR**

(30) Priority: **06.01.2004 JP 2004001132**



(71) Applicant: **Mitsui Chemicals Polyurethanes, Inc.**
**Tokyo 105-7117 (JP)**

(72) Inventors:
- **IWA, Tsuyoshi,**
**c/o Mitsui Chemicals**
**Sodegaura-shi,**
**Chiba 290-265 (JP)**
- **SHIBATA, Tatsuya,**
**c/o Mitsui Chemicals**
**Sodegaura-shi,**
**Chiba 299-0265 (JP)**
- **OKUBO, Kazuhiko,**
**c/o Mitsui Chemicals**
**Sodegaura-shi,**
**Chiba 2990-265 (JP)**

(74) Representative: **Wytenburg, Wilhelmus Johannes et al**
**Mewburn Ellis LLP**
**York House**
**23 Kingsway**
**London WC2B 6HP (GB)**


# (54) THERMOSETTING POLYAMIDE FOAM AND USE THEREOF, AND METHOD FOR PRODUCING THERMOSETTING POLYAMIDE


(57) A thermosetting polyamide foam prepared by reacting a polyisocyanate compound with a polyester polycarboxylic acid using a compound having a P=N bond as a catalyst under conditions of an NCO index of not less than 1.6. The polyamide foam is excellent in heat resistance (thermal decomposition resistance) and moldability, and is applicable for heat-resistant vibration dampers, heat-resistant sound-absorbing materials and heat-resistant cushioning materials.


*Fig.1*

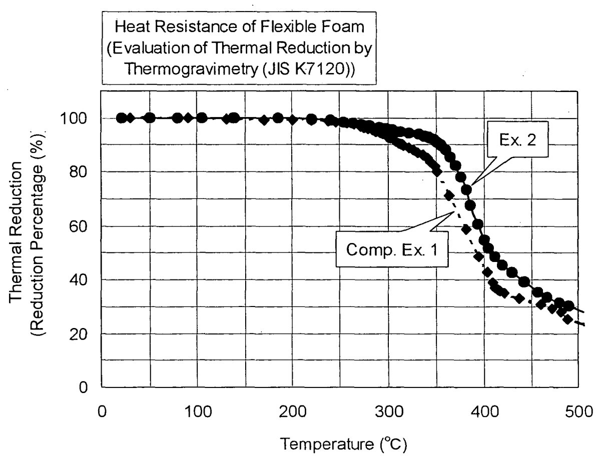


EP 1 702 937 A1

## Description

## TECHNICAL FIELD

The present invention relates to a thermosetting polyamide foam, uses thereof, and method for producing a thermosetting polyamide. More particularly, the invention relates to a thermosetting polyamide foam obtained by a reaction between a polyisocyanate compound and a polycarboxylic acid, uses thereof, and a method for producing a thermosetting polyamide using a specific catalyst.

## BACKGROUND ART

Representative examples of foams are flexible polyurethane foams obtained from a polyisocyanate compound and a polyether polyol or polyester polyol as starting materials. The polyurethane foams are excellent in moldability and cushioning properties, hence they have been widely used in the world as, for example, cushion materials for automobile seats and sofas. However, these flexible polyurethane foams are not suitable for uses as heat insulation materials at a high temperature (of 160°C or above) since they are commonly poor in heat resistance. Accordingly, it is difficult to use these foams for vibration dampers, sound-absorbing materials and cushioning materials used around an internal combustion engine for automobile or the like.

Therefore, foams capable of wearing at high temperature (of 160°C or above) and available for the uses such as vibration dampers, sound-absorbing materials and cushioning materials are required. Polyamide foams which are usually more excellent than polyurethane in heat resistance have been studied.

However, since the reaction rate between an isocyanate and a carboxylic acid is slow, it is practically difficult to obtain polyamide foams having excellent moldability, high heat resistance and high productivity, only by mixing starting materials with stirring in the conventional method, similarly to polyurethane foams.

It is well known that an amide bond is formed together with generation of carbon dioxide by a reaction between an isocyanate and a carboxylic acid, and that polyamide is produced by applying this reaction to the reaction between a polyisocyanate and a polycarboxylic acid. For example, Patent Document 1 (U.S. Patent No. 4,129,715) discloses that a thermoplastic polyester amide sheet can be obtained from a polyester polyether dicarboxylic acid and MDI.

Further, it is known that an aliphatic and/or alicyclic diisocyanate is allowed to react with an aliphatic polyester polycarboxylic acid obtained from an alicyclic or aliphatic carboxylic acid, and an alicyclic or aliphatic alcohol to form a polyamide and therewithal foam it, whereby a biodegradable polyamide foam is obtained (see Patent Document 2 (Japanese Laid-open Publication No. 06-9760/1994)). Moreover, it is known that when an isocyanate is allowed to react with a carboxylic acid, amino-substituted pyridine and/or nitrogen-substituted imidazole is preferably used in view of productivity improvement (Patent Document 3 (Japanese Patent No. 3309980)).

Patent Document 4 (GB Patent No. 908,337) discloses a method for producing a flexible or rigid foam by reacting a polyhydroxy and/or polycarboxy compound with a polyisocyanate in the presence of a catalyst to form a perhydrotriazine ring of isocyanate.

Patent Document 5 (U.S. Patent No. 3,620,987) provides a polyamide-imide foam having a high heat resistance, which is obtained by reacting a derivative of polycarboxylic acid and/or a polycarboxylic anhydride with an organic polyisocyanate using a catalyst that is a combination of a quaternary amine and an aliphatic alcohol, and which is available for heat insulation materials capable of being filled and cured into void parts in a construct or a pipeline.

Patent Document 6 (FR Patent No. 1.289.074) discloses a technology to efficiently produce a polyamide foam by reacting a polycarboxylic acid with an excess polyisocyanate using a catalyst such as an alkali metal salt.

The method disclosed in Patent Document 2 (Japanese Laid-open Publication No. 06-9760/1994) and Patent Document 3 (Japanese Patent No. 3309980) is excellent in that a polyamide foam can be easily produced. However, Patent Document 2 (Japanese Laid-open Publication No. 06-9760/1994) fails to disclose a polycarboxylic acid permitting to satisfy both moldability and heat resistance, and a catalyst favorably used. The method described in this publication is incomplete as a practical technology for producing a polyamide foam having high heat resistance.

The method disclosed in Patent Document 3 (Japanese Patent No. 3309980) is a technology for producing a polyurethane foam by reacting a polycarboxylic acid with an isocyanate and using, as a foaming agent, carbon dioxide generated by the above reaction. When a polyol having a hydroxyl group is not substantially contained, the time (cream time) until beginning of foaming is long. The cream time is 34 seconds even where shortest, and the time necessary for curing is 24 hours. Therefore, it is difficult to industrially obtain a polyamide foam using only a polycarboxylic acid substantially.

A technology disclosed in Patent Document 4 (GB Patent No. 908337) is an excellent method by which a polyamide foam can be efficiently produced. However, the patent fails to disclose that the properties of a polyester polycarboxylic acid and a catalyst used during foaming and curing permit to satisfy both moldability and heat resistance of the polyamide foam.

A technology disclosed in Patent Document 5 (U.S. Patent No. 6,320,987) is an excellent method by which a polyamide-imide foam having high heat resistance can be efficiently produced. However, the patent fails to disclose that the properties of a polyester polycarboxylic acid and a catalyst used during foaming and curing permit to satisfy both moldability and heat resistance of the polyamide-imide foam.

A technology disclosed in Patent Document 6 (FR Patent No. 1.289.074) is an excellent method by which a polyamide foam can be efficiently produced. However, the patent fails to disclose that the properties of a polyester polycarboxylic acid and a catalyst used during foaming and curing permit to satisfy both moldability and heat resistance of the polyamide foam.

Patent Document 1: U.S. Patent No. 4,129,715
Patent Document 2: Japanese Laid-open Publication No. 06-9760/1994)
Patent Document 3: Japanese Patent No. 3309980
Patent Document 4: GB Patent No. 908,337
Patent Document 5: U.S. Patent No. 3,620,987
Patent Document 6: FR Patent No. 1.289.074

## DISCLOSURE OF THE INVENTION

### PROBLEMS TO BE SOLVED BY THE INVENTION

It is an object of the invention to provide a thermosetting polyamide foam excellent in heat resistance (thermal decomposition resistance) and moldability, a method for producing the same, and a heat-resistant vibration-damper, heat-resistant sound-absorbing material and heat resistant cushioning material using the thermosetting polyamide foam. It is another object of the invention to provide a thermosetting polyamide foam excellent in cushioning properties as well.

### MEANS FOR SOLVING THE PROBLEMS

The present inventors have been earnestly studied in order to solve the above problems and has accomplished the present invention.

A thermosetting polyamide foam according to the present invention is prepared by reacting a polyisocyanate compound with a polyester polycarboxylic acid using a compound having a P=N bond as a catalyst under conditions of an NCO index of not less than 1.6.

The polyester polycarboxylic acid preferably has an acid value of not less than 20 mgKOH/g and not more than 70 mgKOH/g, and a hydroxyl number of not more than 1/8 of the acid value.

The NCO index is preferably not less than 2.0 and not more than 3.0.

A method for producing a thermosetting polyamide according to the present invention comprises:

reacting a polyisocyanate compound with a polycarboxylic acid using a phosphine oxide compound represented by the following chemical formula (1):

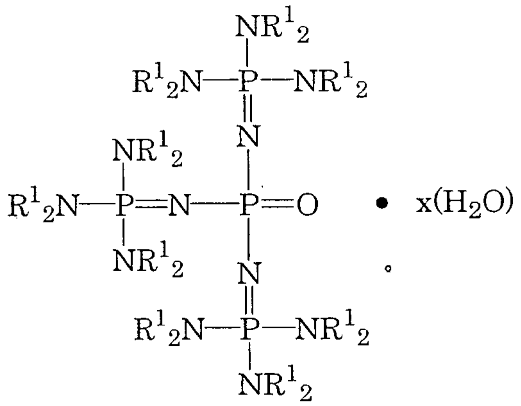

(1)

wherein $R^1$'s are independently a hydrocarbon group of 1 to 10 carbon atoms, and two $R^1$'s on one nitrogen atom may bind to each other to form a cyclic structure; x, which denotes the amount of water contained in terms of molar

ratio, is in the range of 0 to 5.0;
a phosphazenium salt of an active hydrogen compound represented by the following chemical formula (2):
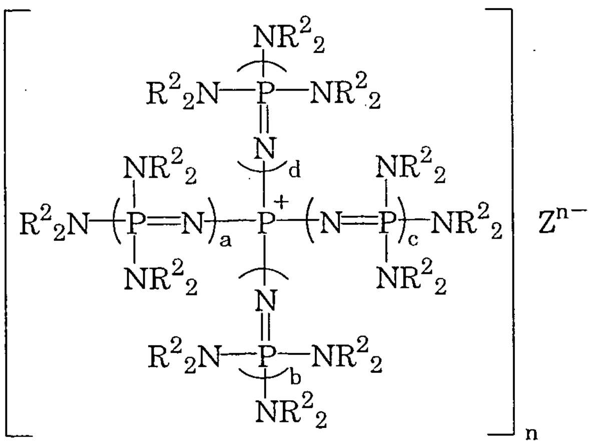

(2)

wherein n, which is the number of phosphazenium cation, is an integer of 1 to 8; $Z^{n-}$ is an n-valent anion of an active hydrogen compound induced by elimination of n-protons from the active hydrogen compound having up to 8 active hydrogen atoms on an oxygen atom or on a nitrogen atom; a, b, c and d are independently a positive integer of not more than 3 or zero, except that all of them can not be zero simultaneously; and $R^2$'s are independently a hydrocarbon group of 1 to 10 carbon atoms, and two $R^2$'s on one nitrogen atom may bind to each other to form a cyclic structure; or
a hydroxyl phosphazenium represented by the following chemical formula (3):
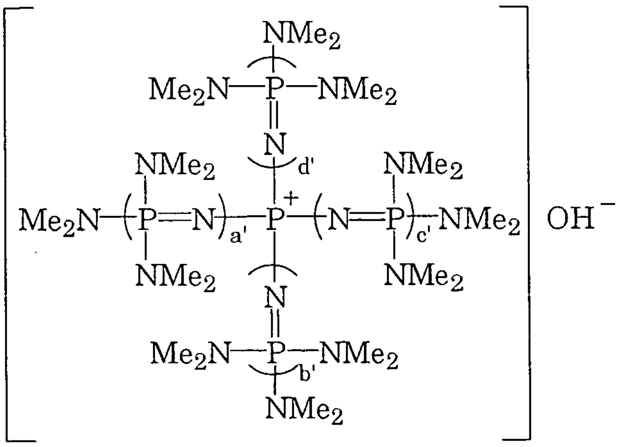

(3)

wherein Me is methyl; and a', b', c' and d' are independently 0 or 1, except that all of them cannot be zero simultaneously.
A thermosetting polyamide foam according to the present invention is prepared by reacting a polyisocyanate compound with a polyester polycarboxylic acid using a catalyst substantially decomposed at a service temperature of the thermosetting polyamide foam.
The service temperature of the thermosetting polyamide foam is preferably not less than 130 °C and less than a decomposition temperature of the thermosetting polyamide foam.
The catalyst substantially decomposed at a service temperature of the thermosetting polyamide foam is preferably used together with a tertiary amine compound catalyst.
The catalyst substantially decomposed at a service temperature of the thermosetting polyamide foam is preferably used together with an alkali metal carboxylate catalyst and/or an alkaline-earth metal carboxylate catalyst.
The amount of the catalyst used in combination with the catalyst substantially decomposed at a service temperature of the thermosetting polyamide foam is preferably less than 50 % by weight of the amount of the catalyst substantially decomposed at a service temperature of the thermosetting polyamide foam.
A heat-resistant vibration damper, a heat-resistant sound-absorbing material and a heat-resistant cushioning material according to the present invention comprise the above-mentioned thermosetting polyamide foam.

## EFFECT OF THE INVENTION

The invention can provide a foam excellent in heat resistance (thermal decomposition resistance) and moldability. The invention can also provide a foam excellent in cushioning properties as well as in heat resistance (thermal decomposition resistance) even when the foam is a flexible foam having a low grass transition temperature. Therefore, the foam of the invention is available as a flexible foam.
In particular, when a specific polyester polycarboxylic acid is selected, a thermosetting polyamide foam excellent in properties as a flexible foam, such as cushioning properties, as well as in heat resistance (thermal decomposition resistance) can be obtained. The thermosetting polyamide foam is applicable for vibration dampers, sound-absorbing materials and cushioning materials used around engines and exhaust pipes for automobile. Further, since the thermosetting polyamide foam is excellent in moldability, the molded articles having a desired shape can be easily produced. Therefore, the thermosetting polyamide foam can be widely used for the vibration dampers, sound-absorbing materials and cushioning materials. Moreover, the thermosetting polyamide foam is widely applicable to equipments having an internal combustion engine, such as airplanes and ships.

## BRIEF DESCRIPTION OF THE DRAWINGS

Figure 1 is a graph showing the measurement results of thermal reduction, regarding the thermosetting polyamide foam produced in Example 2 and the polyurethane foam produced in Comparative Example 1.

## BEST MODE FOR CARRYING OUT THE INVENTION

The foam of the invention can be prepared by reacting a polyisocyanate compound and a polyester polycarboxylic acid, which are used as starting materials, in the presence of a specific catalyst. The foam may contain isocyanulate, polyurea, polyimide and carbodiimide, to the extent that characteristics as the foam do not become impaired. The foam may also contain an ether bond and an urethane bond, to the extent the heat resistance does not become impaired.
The polyester polycarboxylic acid, which is used as a starting material for the thermosetting polyamide foam of the invention, can be prepared by a dehydration-condensation between polycarboxylic acid and glycol using a known method. This dehydration-condensation reaction can be performed in an inert gas such as nitrogen gas by a known method such as a high-temperature polycondensation in the absence of a solvent or a solution polycondensation.
The polycarboxylic acid is not particularly restricted as long as it has at least two carboxyl groups in the molecule. The polycarboxylic acid of 2 to 12 carbon atoms is preferably used. Of these acids, the polycarboxylic acid containing no ether bond is more preferable from the viewpoint of heat resistance. Examples of the polycarboxylic acid include oxalic acid, malonic acid, succinic acid, glutaric acid, adipic acid, pimelic acid, suberic acid, azelaic acid, sebacic acid, maleic acid, phthalic acid, isophthalic acid, terephthalic acid and trimellitic acid. These acids can be used singly or in combination of two or more kinds.
The glycol is not particularly restricted as long as it has at least two hydroxyl groups in the molecule. The glycol of 1 to 12 carbon atoms can be usually used. Of these, the glycol containing no ether bond is preferable from the viewpoint of heat resistance. Further, in order to avoid using any solvents in the dehydration condensation process and in order to easily perform the dehydration-condensation by a known method, the glycol is preferably a liquid at ordinary temperature and preferably has a boiling point of not less than 185 °C. Examples of the glycol include ethyleneglycol, propyleneglycol (i.e., 1,2-propanediol), 1,3-propanediol, neopentyl glycol, 1,2-butanediol, 1,3-butanediol, 1,4-butanediol, 1,5-pentanediol and 2,5-hexanediol. These diols can be used singly or in combination of to or more kinds.
The properties, such as acid value, hydroxyl number and viscosity, of the polyester polycarboxylic acid are not particularly restricted when the polyester polycarboxylic acid is used in order to obtain a usual foam. On the other hand, when the polyester polycarboxylic acid is used in order to obtain a flexible foam, the acid value is particularly preferably not less than 20 mgKOH/g and not more than 70 mgKOH/g from the viewpoint of reactivity between isocyanate group and carboxyl group, moldability and cushioning properties.
From the viewpoint of heat resistance, the hydroxyl number is preferably not more than 1/8, more preferably not more than 1/9, of the acid value. From the viewpoint of moldability, the viscosity at 80 °C is preferably not more than

2500 mPa·s, more preferably not more than 1800 mPa·s.
In the dehydration-condensation reaction for the polyester polycarboxylic acid, the ratio between polycarboxylic acid and glycol used is not restricted. In order to accomplish the acid value and hydroxyl number in the above ranges, the molar ratio of carboxyl group in carboxylic acid to hydroxyl group in glycol (carboxyl group/hydroxyl group) may be not less than 1.05 and not more than 1.4, preferably not less than 1.1 and not more than 1.4. If the molar ratio is below the lower limit, the hydroxyl number cannot be sufficiently reduced and the acid value is sometimes too low. If the molar ratio exceeds the upper limit, unreacted acid monomer sometimes remains to deteriorate the characteristics of the foam.

The reaction temperature is preferably not less than 200°C and not more than 270°C, more preferably not less than 220°C and not more than 250°C, from the viewpoint of reactivity.
While a polymerization catalyst may not be used in the dehydration-condensation reaction since the reaction proceeds in the absent of the catalyst, the addition of the polymerization catalyst is preferred in view of acceleration of the reaction. Examples of the polymerization catalyst used herein include titanium-based catalysts and tin-based catalysts, specifically dibutyltin oxide, but the catalyst is not restricted thereto. When the polymerization catalyst is added, the amount of the catalyst is preferably not more than 1.0 part by weight per 100 parts by weight of the polyester polycarboxylic acid given after the completion of the reaction. The lower limit of the amount of the catalyst is not particularly restricted as long as the catalytic action is expressed, but is preferably 0.01 parts by weight.

The polyisocyanate compound used in the production of the thermosetting polyamide foam of the invention is not particularly restricted. For example, it is compounds having 3 to 12 carbon atoms and at least two isocyanate groups. Examples of the polyisocyanate compound include polymethylene polyphenyl polyisocyanate, 4,4'-diphenylmethane diisocyanate, 2,4'-diphenylmethane diisocyanate and mixtures thereof; 2,4-tolylene diisocyanate, 2,6-tolylene diisocyanate and mixtures thereof; and hexamethylene diisocyanate. Further, a mixture of the tolylene diisocyanate and polymethylene polyphenyl polyisocyanate can be used.

Of these compounds, aromatic polyisocyanate such as polymethylene polyphenyl polyisocyanate, 4,4'-diphenylmethane diisocyanate, 2,4'-diphenylmethane diisocyanate and mixtures thereof, and 2,4-tolylene diisocyanate, 2,6-tolylene diisocyanate and mixtures thereof are preferably used as the polyisocyanate compounds from the viewpoint of reactivity between the isocyanate group and carboxyl group or curability in foaming.

The foam of the invention can be produced by performing the reaction and foaming using the polyester polycarboxylic acid, the polyisocyanate, a foaming catalyst, and optionally a foam stabilizer and another component. Preferably, the foam can be produced by foaming in a mold. Examples of the other component include water and an additive (e.g., a flame retardant, a pigment, a UV absorbing agent and an antioxidant). As the additives, known compounds can be used (for example, see "Polyurethane" 8th edition, edited by Nobutaka Matsudaira and Tetsuo Maeda, p134-137, Maki Shoten Co., 1964).

In the production of the thermosetting polyamide foam of the invention, the NCO index is preferably not less than 1.6, and more preferably not less than 2.0. When the NCO index is not less than 1.6, the molding can be performed at higher speed due to the acceleration of the reaction between the carboxylic group and isocyanate group, hence a good foam can be obtained. Further, a nurate bond can be formed in a balanced manner, hence a foam excellent in heat resistance can be obtained. In particular, when a flexible foam is produced, the NCO index is desirably in the range of 2.0 to 3.0 in view of heat resistance, moldability and cushioning properties.

The NCO index in the invention refers to the total number of isocyanate groups in polyisocyanate divided by the total number of active hydrogen atoms capable of reacting with isocyanate group, the active hydrogen atom being contained in carboxylic groups and hydroxyl groups in polyester polycarboxylic acid, in amino groups of a crosslinking agent and in water. For example, when the number of the active hydrogen atoms capable of reacting with the isocyanate group is stoichiometrically equal to the number of the isocyanate groups in polyisocyanate, the NCO index is 1.0.

The polyester polycarboxylic acid and the polyisocyanate are preferably mixed just before foaming. It is preferable to previously mix the other component with the polyester polycarboxylic acid, if necessary, and the mixture may be used immediately after mixing, or an appropriate amount of the mixture may be used after storage. The combination of the other components, the mixing order, the storage time after mixing and the like can be appropriately determined. Of these mixtures, a mixture of the polyester polycarboxylic acid and the other component, specifically, a mixture of the polyester polycarboxylic acid, a foaming catalyst, and if necessary, a foam stabilizer, water and another additive (e.g., a flame retardant, a pigment, a UV absorbing agent and an antioxidant), is sometimes referred to as a resin premix. The composition thereof can be appropriately determined depending on the characteristics of the desired flexible foam. The resin premix thus obtained is allowed to react with polyisocyanate to given the foam of the invention.

The viscosity of the resin premix is preferably not more than 2,500 mPa·s at a temperature of 80°C from the viewpoint of mixing properties in a foaming machine and moldabiliry.
The method for mixing the polyester polycarboxylic acid with the polyisocyanate may be any one of a dynamic mixing and a static mixing, or the both may be used in combination. Exemplary dynamic mixings include a mixing using a mixing impeller or the like. Exemplary static mixings include a collisional mixing in a machine-head mixing-chamber of a foaming machine, a mixing in a feed piping using a static mixer or the like.

The mixing temperature can be arbitrarily determined depending on the required quality of the desired foam and the properties of the polyester polycarboxylic acid and the resin premix. The mixing temperature is preferably not less than room temperature and not more than 90°C.

The pressure during mixing can be arbitrarily determined depending on the required quality of the desired foam and the properties of the polyester polycarboxylic acid and the resin premix. The temperature for heat curing can be appropriately selected to the extent that heat shock is not caused, and is preferably not more than 120°C. The heat-curing time is desirably not more than 15 minutes from a practical standpoint.

In the present invention, while it is possible and preferable to perform the foaming by taking advantage of carbon dioxide gas produced by the reaction of the isocyanate with the polyester polycarboxylic or water, a known chemical foaming agent or physical foaming agent other than water may be used if necessary (see, for example, "Polyurethane" 8th edition, edited by Nobutaka Matsudaira and Tetsuo Maeda, p134-135, Maki Shoten Co., 1964).

In the present invention, a compound having a P=N bond is preferably used as a foaming catalyst used for production of the thermosetting polyamide foam. By the use of the compound, the reactivity between the isocyanate group and carboxyl group is enhanced, hence the thermosetting polyamide can be effectively produced. As a result, the heat-curing time can be shortened to not more than 15 minutes, and moldability is improved. Since a nurate bond is formed concurrently, the foam obtained is excellent in heat resistance and flame retardancy.

In the present invention, the catalyst substantially decomposed at a service temperature of the resultant thermosetting polyamide foam can be used as a foaming catalyst used for production of the thermosetting polyamide foam. When the compound having such a characteristic is used, heat resistance (a temperature at 10 % by weight of mass reduction) of the thermosetting polyamide foam is improved.

The service temperature of the thermosetting polyamide foam is preferably not less than 130 °C and less than a decomposition temperature of the thermosetting polyamide foam. In particular, it is preferable to use the thermosetting polyamide foam at a temperature of not less than 160 °C. The decomposition temperature of the thermosetting polyamide foam is about 250 to 300 °C.

In the present invention, a compound having a decomposition temperature of not less than room temperature and not more than 200 °C is favorably used as the foaming catalyst. If a compound having a decomposition temperature exceeding 200 °C is used, heat resistance (a temperature at 10 % by weight of mass reduction) of the thermosetting polyamide foam sometimes deteriorates. A compound desirably used as the foaming catalyst has a decomposition temperature of more preferably not more than 180 °C, most preferably not more than 160 °C.

The amount of the foaming catalyst used is preferably 0.005 to 20 parts by weight, more preferably 0.01 to 10 parts by weight, per 100 parts by weight of the polyester polycarboxylic acid.

For shortening a curing time, it is also preferred that the catalyst substantially decomposed at a service temperature of the thermosetting polyamide foam is combined with a tertiary amine compound catalyst, or an alkali metal carboxylate catalyst and/or an alkaline-earth metal carboxylate catalyst.

In this case, the amount of the catalyst used in combination with the catalyst substantially decomposed at a service temperature of the thermosetting polyamide foam is preferably less than 50 % by weight of the amount of the catalyst substantially decomposed at a service temperature of the thermosetting polyamide foam. If the amount of the catalyst combined exceeds the upper limit, heat resistance (a temperature at 10 % by weight of mass reduction) of the thermosetting polyamide foam sometimes deteriorates.

The foam of the invention can be produced by reacting the polyisocyanate compound with the polyester polycarboxylic acid using a catalyst substantially decomposed at a service temperature of the thermosetting polyamide foam, preferably a catalyst having a thermal decomposition temperature of not less than room temperature and not more than 200 °C, and foaming the reaction product. Further, it is desired that the following method for producing a thermosetting polyamide is applied to produce the foam of the invention using, as a polycarboxylic acid, the polyester polycarboxylic acid described above.

The method for producing a thermosetting polyamide of the invention comprises:

reacting a polyisocyanate compound with a polycarboxylic acid using a phosphine oxide compound represented by the following chemical formula (1):

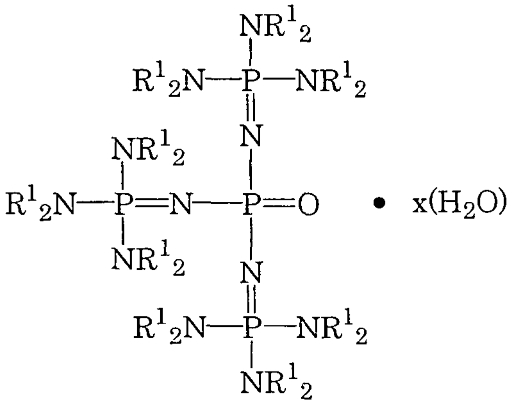

(1)

wherein $R^1$'s are independently a hydrocarbon group of 1 to 10 carbon atoms, and two $R^1$'s on one nitrogen atom may bind to each other to form a cyclic structure; x, which denotes the amount of water contained in terms of molar ratio, is in the range of 0 to 5.0;

a phosphazenium salt of an active hydrogen compound represented by the following chemical formula (2):

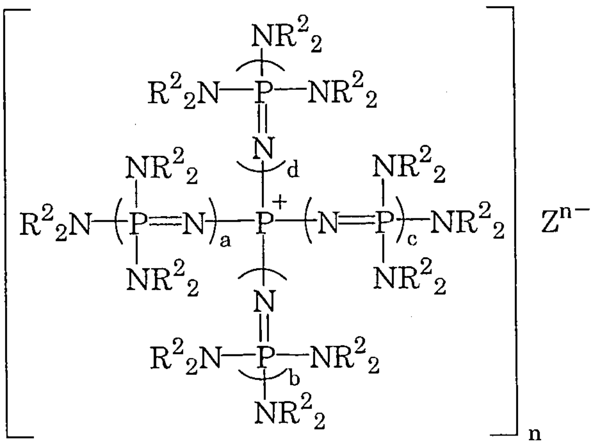

(2)

wherein n, which is the number of phosphazenium cation, is an integer of 1 to 8; $Z^{n-}$ is an n-valent anion of an active hydrogen compound induced by elimination of n-protons from the active hydrogen compound having up to 8 active hydrogen atoms on an oxygen atom or on a nitrogen atom; a, b, c and d are independently a positive integer of not more than 3 or zero, except that all of them can not be zero simultaneously; and $R^2$'s are independently a hydrocarbon group of 1 to 10 carbon atoms, and two $R^2$'s on one nitrogen atom may bind to each other to form a cyclic structure; or

a hydroxyl phosphazenium represented by the following chemical formula (3):

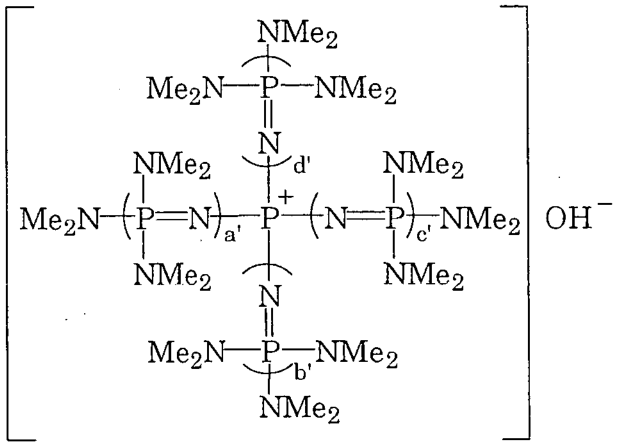

(3)

wherein Me is methyl; and a', b', c' and d' are independently 0 or 1, except that all of them cannot be zero simultaneously.

By the use of any one of the phosphine oxide compound, the hydroxyl phosphazenium and the phosphazenium salt as a catalyst, the reactivity between isocyanate group and carboxyl group can be remarkably enhanced and the nurate bond can be effectively formed. As a result, a favorable flexible polyamide foam which combine the excellent heat resistance and properties as a flexible foam such as cushioning properties can be produced.

Examples of the phosphine oxide compound represented by the chemical formula (1) include tris[tris(dimethylamino)phosphoranilideneamino]phosphine oxide, tris(tripyrrolidinophosphoranilideneamino)phosphine oxide and tris(tripiperidinophosphoranilideneamino) phosphine oxide. The compound preferably used is tris[tris(dimethylamino)phosphoranilideneamino]phosphine oxide.

Examples of the phosphazenium salt of the active hydrogen compound represented by the chemical formula (2) include dimethylaminotris[tris(dimethylamino) phosphoranilideneamino]phosphonium tetrafluoroborate, tetrakis[tri(pyrrolidin-1-yl)phosphoranilideneamnio] phosphonium tetrafluoroborate, tetrakis[tris(dimethylamino)phosphoranilideneamino] phosphonium chloride and diethylaminotris[tris(diethylamino)phosphoranilideneamino] phosphonium tetrafluoroborate. The compound preferably used is tetrakis[tris(dimethylamino) phosphoranilideneamino]phosphonium chloride.

Examples of hydroxyl phosphazenium represented by the chemical formula (3) include tetrakis[tris(dimethylamino)phosphoranilideneamino] phosphonium hydroxide and (dimethylamino)tris[tris(dimethylamino) phosphoranilidneamino]phosphonium hydroxide. The compound preferably used is tetrakis[tris(dimethylamino) phosphoranilideneamino] phosphonium hydroxide.

In the present invention, together with the foaming catalyst substantially decomposed at a service temperature of the thermosetting polyamide foam, preferably the compound having a P=N bond, a known catalyst used for producing polyurethane foam can be used (see, for example, "Polyurethane" 8th edition, edited by Nobutaka Matsudaira and Tetsuo Maeda, p127-129, Maki Shoten Co., 1964). The catalysts used in combination include aliphatic amines such as triethylenediamine, N,N,N',N'-tetramethyl hexamethylenediamine, bis(N,N-dimethylaminoethylether) and morpholines; organotin compounds such as tin octanoate and dibutyltin laurate; alkali metal carboxylates such as cesium acetate, potassium acetate and sodium acetate; alkali metal polycarboxylates such as cesium salts, potassium salts and sodium salts, of polyester polycarboxylic acids; alkaline-earth metal carboxylates such as magnesium acetate, calcium acetate and barium acetate; alkaline-earth metal polycarboxylates such as magnesium salts, calcium salts and barium salts, of polyester polycarboxylic acids; tertiary amine catalysts such as triethylamine, triethylenediamine, 1,3,5-tris(dimethylaminopropyl)-s-hexahydrotriazine, 2,4,6-tris(dimethylaminomethyl)phenol and 1,8-diazabicyclo[5.4.0]undecene-7; quaternary ammonium salts of carboxylic acids and tertiary amines; and imidazole. These known catalysts may be used singly, or in combination of plural kinds, together with the foaming catalyst.

When the known catalyst is used together with the foaming catalyst, the amount of the catalyst used is preferably less than 50 % by weight of the amount of the foaming catalyst substantially decomposed at a service temperature of the thermosetting polyamide foam, and is more preferably 0.005 to 10 parts by weight per 100 parts by weight of the polyester polycarboxylic acid.

As is clear from the characteristic that the specific catalyst is used in the method for producing a thermosetting polyamide of the invention, the above polyisocyanate compound and the polycarboxylic acid are not particularly restricted. Examples of the polyisocyanate compound used include naphthalene-1,5-diisocyanate and norbornene diiocyanate in addition to

the above-mentioned polyisocyanate compounds. These polyisocyanate compounds may be used together with a monoisocyanate such as phenyl isocyanate and isophorone isocyanate. The polycarboxylic acids used include the above-mentioned polyester polycarboxylic acid and polycarboxylic acid, and compounds similar to these acids. These polycarboxylic acids may be used together with a monocarboxylic acid.

The method for producing a thermosetting polyamide can be favorably applied to the production of the foam of the invention. The production of a thermosetting polyamide foam by the above method leads to the improved heat resistance of the foam and the improved moldability of the foam due to reduction of the heat-curing time.

The overall density of the foam obtained in the invention can be arbitrarily determined depending on the required quality of the objective foam. For example, the overall density of the flexible foam can be usually determined in the range of not less than 10 kg/m$^3$ and not more than 150 kg/m$^3$.

The heat resistance of the foam obtained in the invention is evaluated by the mass reduction percentage $M_L$ (%) calculated by the following equation:

$$M_L = (m_0 - m_t)/m_0 \times 100$$

wherein $m_0$ denotes the mass (mg) before heating, and $m_t$ denotes the mass (mg) at a temperature t (°C) after heating, and wherein the mass is measured using a dry air as a feed gas under conditions of a feed gas rate of 200 ml/min and a heating rate of 10°C/min, according to JIS K7120 "Testing Methods of Plastics by Thermogravimetry".

The foam obtained in the invention has the following excellent heat resistance (thermal decomposition resistance). The temperature t at which the mass reduction percentage $M_L$(%) is 10% is not less than 320°C, preferably not less than 325°C, and more preferably not less than 330°C.

**EXAMPLES**

Hereinbelow, the present invention will be concretely y Examples. However, it should be construed that the invention is not limited thereto. Hereinafter, the term "part(s)" denotes "part(s) by weight" unless otherwise mentioned.

The analysis and measurement were carried out by the following methods.

(1) Properties of polyester polycarboxylic acid, polyether polyol and foaming catalyst

(i) Acid value: The acid value, which is defined by the mass (mg) of potassium hydroxide necessary for neutralizing 1 g of the polyester resin, was measured according to section 5.3 "Acid Value" in JIS K6901 " Testing methods for liquid unsaturated polyester resin".

(ii) Hydroxyl number: The hydroxyl number, which is defined by the mass (mg) of potassium hydroxide necessary for neutralizing acetic acid generated by acetylation of 1 g of the polyester resin, was measured according to section 5.4 "Hydroxyl Number" in JIS K6901.

(iii) Viscosity: The viscosity was measured according to section 5.5.1 "Brookfield Viscometer Method" in JIS K6901, using a Brookfield type viscometer (Model B8M) indicated in category Type I of Table 6 "The Kind and Characteristics of Viscometers" described in the same section.

(iv) Thermal decomposition temperature of a foaming catalyst: The mass was measured using a dry air as a feed gas under conditions of a feed gas rate of 200 ml/min and a heating rate of 10°C/min, according to JIS K7120 "Testing Methods of Plastics by Thermogravimetry". The mass reduction percentage $M_L$ (%) was calculated by the following equation:

$$M_L = (m_0 - m_t)/m_0 \times 100$$

wherein $m_0$ denotes the mass (mg) before heating, and $m_t$ denotes the mass (mg) at a temperature t (°C) after heating. The thermal decomposition temperature was defined by a temperature at which the mass reduction percentage $M_L$ (%) was 2%.

(2) Properties of foam

(i) Heat resistance: The mass reduction percentage $M_L$(%) was measured using a dry air as a feed gas under conditions of a feed gas rate of 200 ml/min and a heating rate of 10°C/min, according to JIS K7120 "Testing Methods of Plastics by Thermogravimetry", and was calculated by the following equation:

$$M_L = (m_0 - m_t)/m_0 \times 100$$

wherein $m_0$ denotes the mass (mg) before heating, and $m_t$ denotes the mass (mg) at t (°C) after heating. The heat resistance was evaluated by the temperature at which the $M_L$ was 10%

(ii) Properties as a flexible foam such as cushioning properties: The following properties were measured according to JIS K6400 "Test methods for flexible polyurethane foam".

Overall density: A test piece was cut out from a core part of the molded flexible foam into a size of 50 mm × 50 mm × 25 mm, and was used in the measurement of the overall density.

Compression permanent set: A test piece was cut out from a core part of the molded flexible foam into a size of 50 mm × 50 mm × 25 mm, and was compressed to 50% of its initial thickness to measure the compression permanent set.

Tensile strength and elongation: The tensile strength and elongation were measured using a dumbbell specimen (No. 1) according to JIS K6400.

Tear strength: The tear strength was measured using a dumbbell specimen (No. 1) according to JIS K6400.

Wet-heat compression permanent set: A test piece was cut out from a core part of the molded flexible foam into a size of 50 mm × 50 mm × 25 mm, and was compressed to 50% of its initial thickness to measure the wet-heat compression permanent set.

(3) Content of isocyanate group: The content of the isocyanate group was measured according to section 5.3 "Content of the Isocyanate Group" in JIS K1603 "Testing Methods for Polymethylene Polyphenyl Polyisocyanate".

<Production examples of polyester polycarboxylic acid>

(Production Example A-1)

In a polymerization vessel equipped with a reflux condenser, a water separator, an inlet tube for nitrogen gas, a thermometer and a stirrer, neopentyl glycol and adipic acid in a molar ratio of 10:11 and 0.075 parts of dibutyltin oxide per 100 parts of the amount of polyester polycarboxylic acid produced at the completion of the reaction were placed. A dehydration-condensation reaction was performed at a temperature ranging from 180 to 260°C with feeding nitrogen into the vessel. At the time when the acid value and hydroxyl number of the reaction product had achieved a prescribed values, the reaction product was taken out from the polymerization vessel, and then was cooled to give polyester polycarboxylic acid A-1. The properties of the resultant polyester polycarboxylic acid A-1 are shown in Table 1.

(Production Example A-2)

Polyester polycarboxylic acid A-2 was produced using a carboxylic acid, a glycol and a polymerization catalyst of the type and in the amount (molar ratio) shown in Table 1. The properties of the resultant polyester polycarboxylic acid A-2 are shown in Table 1.

Table 1

| polyester polycarboxylic acid | | | | A-1 | A-2 |
|---|---|---|---|---|---|
| polycondensation conditions | starting materials | type | acid/glycol | adipic acid /neopentyl glycol | adipic acid /neopentyl glycol |
| | | molar ratio | acid/glycol | 11/10 | 11/10 |
| | | COOH/OH (molar ratio) | | 1.1 | 1.1 |
| | polymerization catalyst | type | | dibutyltin oxide | none |
| | | amount (parts per 100 parts of polyester polycarboxylic acid) | | 0.075 | none |
| | reaction temp. | °C | | 230 | 230 |

(continued)

| polyester polycarboxylic acid | | | A-1 | A-2 |
|---|---|---|---|---|
| properties | acid number | mgKOH/g | 55 | 54 |
| | hydroxyl value | mgKOH/g | 4 | 4 |
| | viscosity (80°C) | mpa·s | 1620 | 1680 |

<Production examples of polyester polyol>

(Production Example B-1)

Polyester polyol B-1 was produced in the same manner as in Production Example A-1, except for using a carboxylic acid, a glycol and a polymerization catalyst of the type and in the amount (molar ratio) shown in Table 2. The properties of the resultant polyester polyol B-1 are shown in Table 2.

Table 2

| polyester polyol | | | | B-1 |
|---|---|---|---|---|
| polycondensation conditions | starting materials | type | acid/glycol | adipic acid /neopentyl glycol |
| | | molar ratio | acid/glycol | 10/11 |
| | | COOH/OH (molar ratio) | | 0.91 |
| | polymerization catalyst | type | | dibutyltin oxide |
| | | amount (parts per 100 parts of polyester polyol) | | 0.075 |
| | reaction temp. | °C | | 230 |
| properties | acid number | mgKOH/g | | 1 |
| | hydroxyl value | mgKOH/g | | 47 |
| | viscosity (80°C) | mPa·s | | 1620 |

<Mixing example of diphenylmethane diisocyanate>

(Production Example D-1)

30 parts of polymethylene polyphenyl polyisocyanate (trade name: Cosmonate M200, available from Mitsui Takeda Chemicals, Inc., isocyanate group content: 31.5%) warmed at 70°C, 20 parts of diphenylmethane diisocyanate (trade name: Cosmonate PH, available from Mitsui Takeda Chemicals, Inc., isocyanate group content: 33.6%) warmed at 70°C, and 50 parts of diphenylmethane diisocyanate (trade name: o-MDI, available from Mitsui Takeda Chemicals, Inc., isocyanate group content: 33.6%) warmed at 70°C were mixed with stirring. Thereafter, the mixture was cooled to give mixed diphenylmethane diisocyanate D-1. The mixed diphenylmethane diisocyanate D-1 has an isocyanate group content of 33.0%.

[Example 1]

100 parts of the polyester polycarboxylic acid A-1 obtained in Production Example A-1, and 2.6 parts of tris[tris(dimethylamino)phosphoranilideneamino]phosphine oxide as a foaming catalyst were mixed to prepare a resin premix. This resin premix was mixed with the mixed diphenylmethane diisocyanate D-1 obtained in Production Example D-1 using a high-pressure foaming machine (manufactured by Gusmer Admiral, Inc.) at 80°C so that the NCO index became 2.0. Immediately thereafter, the mixture was injected into a mold having an inside dimension of 400 × 400 × 100 mm and previously adjusted at 80°C, at an injection pressure ranging from 10 to 15 $N/cm^2$ and an injection rate of 20 kg/min, and then the mold was shut, followed by foaming. The resultant foam was cured by heating for 15 minutes in a hot-air

oven at 100°C, and then a flexible polyamide foam was taken out from the mold. The properties of the resultant flexible polyamide foam are shown in Table 3.

[Examples 2 to 6]

Flexible polyamide foams were produced in the same manner as in Example 1, except that foaming was performed using a polyester polycarboxylic acid, a polyisocyanate, a foam stabilizer and a foaming catalyst of the type and in the amount (parts) shown in Table 3, at the NCO index, mixing temperature and heat-curing conditions shown in Table 3. The properties of the resultant flexible polyamide foam are shown in Table 3.
Table 3

| | | | | Ex. 1 | Ex. 2 | Ex. 3 |
|---|---|---|---|---|---|---|
| foaming conditions | polyester polycarboxylic acid | | | A-1 | A-1 | A-1 |
| | polyisocyanate | | | D-1 | D-1 | D-1 |
| | NCO index | | | 2.0 | 2.4 | 2.4 |
| | foam stabilizer | type | | | | |
| | | amount (parts per 100 parts of polyester polycarboxylic acid) | | 0.0 | 0.0 | 0.0 |
| | foaming catalyst | type | | tris[tris(dimethylamino) phosphoranilidene amino] phosphine oxide | tris[tris(dimethylamino) phosphoranilidene amino] phosphine oxide | tris[tris(dimethylamino) phosphoranilidene amino] phosphine oxide |
| | | amount (parts per 100 parts of polyester polycarboxylic acid) | | 2.6 | 2.6 | 2.6 |
| | | decomposition temp. | °C | 162 | 162 | 162 |
| | | type | | | | triethylenediamine |
| | | amount (parts per 100 parts of polyester polycarboxylic acid) | | 0.0 | 0.0 | 1.0 |
| | mixing temp. | | °C | 80 | 80 | 80 |
| | heat-curing temp. | | °C | 100 | 100 | 100 |

Decomposition temp.: a temperature at which weight reduction percentage was 2% in a thermobalance measurement (temperature rising rate: 10°C/min, under air atmosphere).

Table 3 (continued)

| | | | | Ex. 1 | Ex. 2 | Ex. 3 |
|---|---|---|---|---|---|---|
| moldability | heat-curing time | | min | 15 | 15 | 15 |
| properties of foam | heat resistance | temperature at which mass reduction percentage was 10% | °C | 361 | 355 | 342 |
| | properties as a flexible foam such as cushioning properties | overall density | $kg/m^3$ | 85 | 80 | 76 |
| | | compression permanent set | % | 40 | 35 | 20 |
| | | tensile strength | kPa | 110 | 178 | 118 |
| | | elongation | % | 60 | 85 | 75 |
| | | tear strength | N/cm | 7 | 7 | 5 |
| | | wet-heat compression permanent set | % | 33 | 30 | 3 |

Table 3 (continued)

| | | | | Ex. 4 | Ex. 5 | Ex. 6 |
|---|---|---|---|---|---|---|
| foaming conditions | polyester polycarboxylic acid | | | A-2 | A-1 | A-1 |
| | polyisocyanate | | | D-1 | D-1 | D-1 |
| | NCO index | | | 2.4 | 2.7 | 2.0 |
| | foam stabilizer | type | | | Silbyk-9100 | |
| | | amount (parts per 100 parts of polyester polycarboxylic acid) | | 0.0 | 1.8 | 0.0 |
| | foaming catalyst | type | | tris[tris(dimethylamino) phosphoranilidene amino] phosphine oxide | tris[tris(dimethylamino) phosphoranilidene amino] phosphine oxide | tris[tris(dimethylamino) phosphoranilidene amino] phosphine oxide |
| | | amount (parts per 100 parts of polyester polycarboxylic acid) | | 2.6 | 2.6 | 2.6 |
| | | decomposition temp. | °C | 162 | 162 | 162 |
| | | type | | | | magnesium stearate |
| | | amount (parts per 100 parts of polyester polycarboxylic acid) | | 0.0 | 0.0 | 0.02 |
| | mixing temp. | | °C | 80 | 80 | 80 |
| | heat-curing temp. | | °C | 100 | 100 | 100 |

Decomposition temp.: a temperature at which weight reduction percentage was 2% in a thermobalance measurement (temperature rising rate: 10°C/min, under air atmosphere).

Silbyk-9100 is available from BYK Chemie GmbH.

Table 3 (continued)

| | | | | Ex. 4 | Ex. 5 | Ex. 6 |
|---|---|---|---|---|---|---|
| moldability | heat-curing time | | min | 15 | 15 | 15 |
| properties of foam | heat resistance | temperature at which mass reduction percentage was 10% | °C | 356 | 358 | 354 |
| | properties as a flexible foam such as cushioning properties | overall density | $kg/m^3$ | 80 | 95 | 85 |
| | | compression permanent set | % | 34 | 38 | 32 |
| | | tensile strength | kPa | 178 | 175 | 125 |
| | | elongation | % | 90 | 65 | 55 |
| | | tear strength | N/cm | 8 | 7 | 7 |
| | | wet-heat compression permanent set | % | 28 | 30 | 33 |

[Comparative Example 1]

100 parts of the polyester polyol B-1 obtained in Production Example B-1, and 1.5 parts of a foam stabilizer (trade name: L532, available from Nippon Unicar Co., Ltd.), 2 parts of triethylenediamine as a foaming catalyst and 3 parts of water were mixed to prepare a resin premix. This resin premix was mixed with the mixed diphenylmethane diisocyanate D-1 obtained in Production Example D-1 using a high-pressure foaming machine (manufactured by Gusmer Admiral, Inc.) at 80°C so that the NCO index became 1.1. Immediately thereafter, the mixture was injected into a mold having an inside dimension of 400 × 400 × 100 mm and previously adjusted at 80°C, at an injection pressure ranging from 10 to 15 $N/cm^2$ and an injection rate of 20 kg/min, and then the mold was shut, followed by foaming. The resultant foam was cured by heating for 15 minutes in a hot-air oven at 100°C, and then a flexible polyamide foam was taken out from the mold. The properties of the resultant flexible polyamide foam are shown in Table 4.

Table 4

| | | | | Comp. Ex. 1 |
|---|---|---|---|---|
| foaming conditions | polyester polyol | | | B-1 |
| | polyisocyanate | | | D-1 |
| | NCO index | | | 1.1 |
| | foam stabilizer | type | | L532 |
| | | amount (parts per 100 parts of polyester polyol) | | 1.5 |
| | foaming catalyst | type | | triethylenediamine |
| | | amount (parts per 100 parts of polyester polyol) | | 2.0 |
| | water | amount (parts per 100 parts of polyester polyol) | | 3.0 |
| | mixing temp. | | °C | 80 |
| | heat-curing temp. | | °C | 100 |
| moldability | heat-curing time | | min | 15 |
| properties of foam | heat resistance | temperature at which mass reduction percentage was 10% | °C | 316 |
| | properties as a flexible foam such as cushioning properties | overall density | $kg/m^3$ | 43 |
| | | compression permanent set | % | 39 |
| | | tensile strength | kPa | 198 |
| | | elongation | % | 105 |
| | | tear strength | N/cm | 8 |
| | | wet-heat compression permanent set | % | 43 |
| The foam stabilizer "L532" is available from Nippon Unicar Co., Ltd. | | | | |

[Comparative Examples 2 to 4]

Flexible polyamide foams were produced in the same manner as in Example 1, except that foaming was performed using a polyester polycarboxylic acid, a polyisocyanate, a foam stabilizer and a foaming catalyst of the type and in the amount (parts) shown in Table 5, at the NCO index, mixing temperature and heat-curing conditions shown in Table 5. The properties of the resultant flexible polyamide foam are shown in Table 5.

Table 5

| | | | | Comp. Ex. 2 | Comp. Ex. 3 | Comp. Ex. 4 |
|---|---|---|---|---|---|---|
| foaming conditions | polyester polycarboxylic acid | | | A-1 | A-1 | A-1 |
| | polyisocyanate | | | D-1 | D-1 | D-1 |
| | NCO index | | | 2.4 | 2.4 | 2.3 |
| | foam stabilizer | type | | Silbyk-9100 | | Silbyk-9100 |
| | | amount (parts per 100 parts of polyester polycarboxylic acid) | | 1.8 | 0.0 | 0.9 |
| | foaming catalyst | type | | triethylenediamine | 1-methylimidazole | cesium salt of polyester polycarboxylic acid A-1 |
| | | amount (parts per 100 parts of polyester polycarboxylic acid) | | 2.6 | 3.5 | 0.66 (in terms of CsOH) |
| | | decomposition temp. | °C | | | 302 |
| | | type | | | | DBU |
| | | amount (parts per 100 parts of polyester polycarboxylic acid) | | 0.0 | 0.0 | 0.27 |
| | mixing temp. | | °C | 80 | 80 | 45 |
| | heat-curing temp. | | °C | 100 | 100 | 110 |

Decomposition temp.: a temperature at which weight reduction percentage was 2% in a thermobalance measurement (temperature rising rate: 10°C/min, under air atmosphere).

Silbyk-9100 is available from BYK Chemie GmbH.

Table 5 (continued)

| | | | | Comp. Ex. 2 | Comp. Ex. 3 | Comp. Ex. 4 |
|---|---|---|---|---|---|---|
| moldability | heat-curing time | | min | 60 | 60 | 15 |
| properties of foam | heat resistance | temperature at which mass reduction percentage was 10% | °C | 345 | A foam could not be obtained due to poor curing properties. | 318 |
| | properties as a flexible foam such as cushioning properties | overall density | $kg/m^3$ | 100 | | 100 |
| | | compression permanent set | % | 37 | | |
| | | tensile strength | kPa | 180 | | 80 |
| | | elongation | % | 50 | | 41 |
| | | tear strength | N/cm | 7 | | 2.7 |
| | | wet-heat compression permanent set | % | 26 | | |

(Heat resistance, evaluation of thermal reduction by thermogravimetory)

With respect to the polyamide foam produced in Example 2 and the polyurethane foam produced in Comparative Example 1, thermal reduction was measured according to JIS K7120 "Testing Methods of Plastics by Thermogravimetry". Figure 1 is a graph of the thermal reduction. In Figure 1, the horizontal axis denotes a temperature t (°C) and the vertical axis denotes a mass reduction percentage $M'_L = m_t / m_0 \times 100$ (%), wherein $m_0$ denotes a mass (mg) before heating and $m_t$ denotes a mass (mg) at the temperature t (°C) after heating.

As seen from this graph, the polyamide foam obtained in Example 2 is 30°C or above superior to the polyurethane foam obtained in Comparative Example 1 in heat resistance.

(Results of evaluation)

Examples teach the followings: the reaction of the polyisocyanate compound with the polyester polycarboxylic acid using the compound having a P=N bond as a catalyst under conditions of a NCO index of not less than 1.6 leads to the formation of the flexible polyamide foam excellent in heat resistance, moldability (a heat-curing time of not more than 15 min) and cushioning properties. Further, the flexible polyamide foam has a temperature at which the mass reduction percentage $M_L$(%) measured by thermogravimetry is 10%, of not less than 320°C, and is sufficiently excellent in heat resistance compared with polyurethane foams.

When a catalyst having a high thermal decomposition temperature is used as a foaming catalyst, it was confirmed that heat resistance of a flexible polyamide foam deteriorated.

INDUSTRIAL APPLICABILITY

The thermosetting polyamide foam of the invention can be applied to vibration dampers, sound-absorbing materials and cushioning materials used around engines and exhaust pipes for automobile. Moreover, the thermosetting polyamide foam is widely applicable to equipments having an internal combustion engine such as airplanes.

## Claims

1. A thermosetting polyamide foam prepared by reacting a polyisocyanate compound with a polyester polycarboxylic acid using a compound having a P=N bond as a catalyst under conditions of an NCO index of not less than 1.6.

2. The thermosetting polyamide foam according to claim 1, wherein the polyester polycarboxylic acid has an acid value of not less than 20 mgKOH/g and not more than 70 mgKOH/g, and a hydroxyl number of not more than 1/8 of the acid value.

3. The thermosetting polyamide foam according to claim 1 or 2, wherein the NCO index is not less than 2.0 and not more than 3.0.

4. A method for producing a thermosetting polyamide comprising:

   reacting a polyisocyanate compound with a polycarboxylic acid using a phosphine oxide compound represented by the following chemical formula (1):

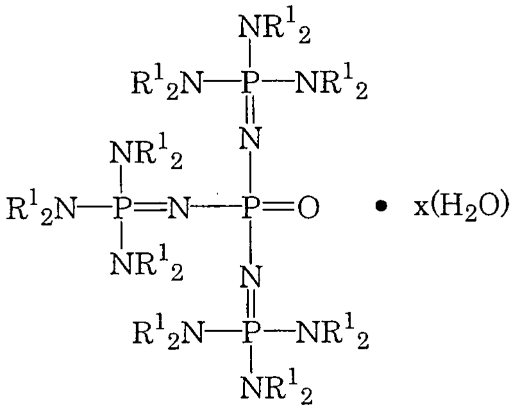

(1)

wherein $R^1$'s are independently a hydrocarbon group of 1 to 10 carbon atoms, and two $R^1$'s on one nitrogen atom may bind to each other to form a cyclic structure; x, which denotes the amount of water contained in terms of molar ratio, is in the range of 0 to 5.0;
a phosphazenium salt of an active hydrogen compound represented by the following chemical formula (2):

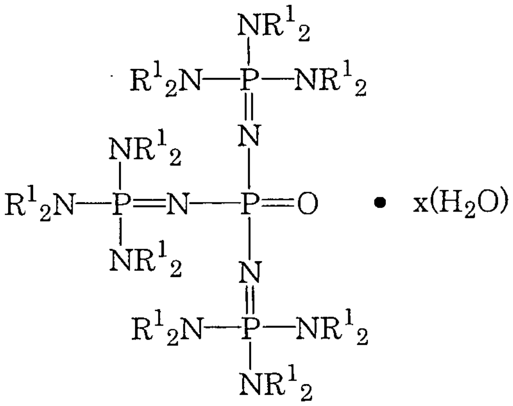

(2)

wherein n, which is the number of phosphazenium cation, is an integer of 1 to 8; $Z^{n-}$ is an n-valent anion of an active hydrogen compound induced by elimination of n-protons from the active hydrogen compound having up to 8 active hydrogen atoms on an oxygen atom or on a nitrogen atom; a, b, c and d are independently a positive integer of not more than 3 or zero, except that all of them can not be zero simultaneously; and $R^2$'s are independently a hydrocarbon group of 1 to 10 carbon atoms, and two $R^2$'s on one nitrogen atom may bind to each other to form a cyclic structure; or a hydroxyl phosphazenium represented by the following chemical formula (3):

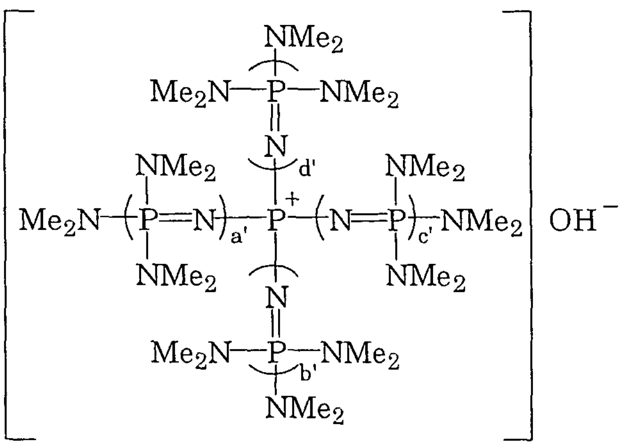

(3)

wherein Me is methyl; and a', b', c' and d' are independently 0 or 1, except that all of them cannot be zero simultaneously.

**5.** A thermosetting polyamide foam prepared by reacting a polyisocyanate compound with a polyester polycarboxylic acid using a catalyst substantially decomposed at a service temperature of the thermosetting polyamide foam.

**6.** The thermosetting polyamide foam according to claim 5, wherein the service temperature of the thermosetting polyamide foam is not less than 130 °C and less than a decomposition temperature of the thermosetting polyamide foam.

**7.** The thermosetting polyamide foam according to claim 5, wherein the catalyst substantially decomposed at a service temperature of the thermosetting polyamide foam is used together with a tertiary amine compound catalyst.

8. The thermosetting polyamide foam according to claim 5, wherein the catalyst substantially decomposed at a service temperature of the thermosetting polyamide foam is used together with an alkali metal carboxylate catalyst and/or an alkaline-earth metal carboxylate catalyst.

9. The thermosetting polyamide foam according to claim 7 or 8, wherein the amount of the catalyst used in combination with the catalyst substantially decomposed at a service temperature of the thermosetting polyamide foam is less than 50 % by weight of the amount of the catalyst substantially decomposed at a service temperature of the thermosetting polyamide foam.

10. A heat-resistant vibration damper comprising the thermosetting polyamide foam according to claim 1 or 5.

11. A heat-resistant sound absorbing material comprising the thermosetting polyamide foam according to claim 1 or 5.

12. A heat-resistant cushioning material comprising the thermosetting polyamide foam according to claim 1 or 5.

*Fig.1*

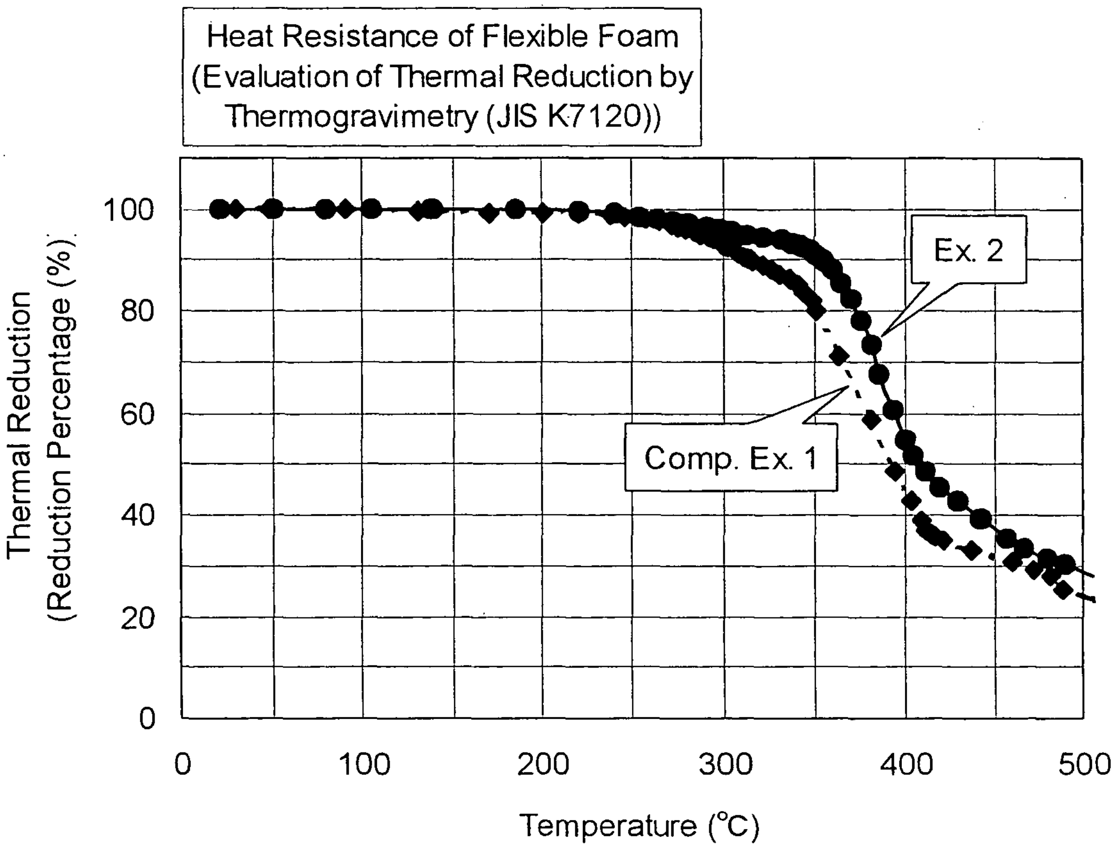
Heat Resistance of Flexible Foam
(Evaluation of Thermal Reduction by
Thermogravimetry (JIS K7120))
Thermal Reduction
(Reduction Percentage (%))
100
80
60
40
20
0
0
100
200
300
400
500
Temperature (°C)
Ex. 2
Comp. Ex. 1

**INTERNATIONAL SEARCH REPORT**

International application No. PCT/JP2005/000067

A. CLASSIFICATION OF SUBJECT MATTER
Int.Cl$^7$ C08G18/16, 18/42, 69/44//(C08G18/16, C08G101:00)

According to International Patent Classification (IPC) or to both national classification and IPC

B. FIELDS SEARCHED

Minimum documentation searched (classification system followed by classification symbols)
Int.Cl$^7$ 18/00-18/87

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-47331 A (Mitsui Chemicals, Inc.), 12 February, 2002 (12.02.02), (Family: none) | 1-12 |
| A | JP 11-60721 A (Mitsui Chemicals, Inc.), 05 March, 1999 (05.03.99), (Family: none) | 1-12 |
| P,A | JP 2005-15521 A (Bridgestone Corp.), 20 January, 2005 (20.01.05), (Family: none) | 1-12 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 April, 2005 (01.04.05) | 19 April, 2005 (19.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.
PCT/JP2005/000067

(1) Claims 5 to 9 have a description that "a catalyst which substantially decomposes at a temperature at which a thermosetting polyamide foam is used". Although it is described that "a compound having a P = N bond" corresponds to the above catalyst (the paragraph 0055), the present specification has no substantial description with respect to a compound other than the above compound which is included in the scope of the catalyst, and therefore, the above claims lack the support in the meaning of PCT Article 6.

As a result, the international search has been carried out with respect to the scope supported by and disclosed in the present specification as "a catalyst which substantially decomposes at a temperature at which a thermosetting polyamide foam is used", that is, with respect to "a compound having a P = N bond".

(2) The chemical formula (2) in claim 4 has no conformity of the chemical formula (2) itself with the description for its substituent. Therefore, the international search has been carried out on the basis that a compound represented by said chemical formula (2) is a phosphazenium salt described in the paragraph 0016 to 0017 or the paragraph 0048 to 0049.

Form PCT/ISA/210 (extra sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4129715 A
- JP 6069760 A
- JP 3309980 B
- GB 908337 A
- US 3620987 A
- FR 1289074
- US 6320987 B


### Non-patent literature cited in the description


- *Polyurethane,* 1964, 134-137
- Polyurethane. Maki Shoten Co, 1964, 134-135
- Polyurethane. Maki Shoten Co, 1964, 127-129